# EUROPÄISCHE PATENTSCHRIFT

(11) **EP 3 597 698 B1**
(45) Veröffentlichungstag und Bekanntmachung des Hinweises auf die Patenterteilung: **06.10.2021**
(21) Anmeldenummer: 18184078.6
(22) Anmeldetag: 18.07.2018
(51) Int. Cl.: C08L 21/00, B60C 1/00

(54) **VERNETZTE POLYMERMISCHUNGEN**
CROSSLINKED POLYMER BLENDS
MÉLANGES POLYMÈRES RÉTICULÉS

(43) Veröffentlichungstag der Anmeldung: 22.01.2020
(73) Patentinhaber: Continental Reifen Deutschland GmbH, 30165 Hannover (DE)
(72) Erfinder: Finger, Sebastian, 30451 Hannover (DE); Fleck, Frank, 30167 Hannover (DE); Recker, Carla, 30167 Hannover (DE)
(74) Vertreter: Continental Corporation

(56) Entgegenhaltungen:
- EP-A1- 1 234 852
- EP-A1- 2 098 564
- EP-A1- 3 312 204
- DE-A1- 4 005 493
- DE-A1- 19 622 169
- DE-A1-102015 210 422
- DE-A1-102015 213 667
- US-A- 5 587 411
- US-A1- 2008 108 733
- US-A1- 2016 237 261
- US-A1- 2017 342 252

## Beschreibung

Die vorliegende Erfindung bezieht sich auf vernetze Polymersysteme, in denen eine Vernetzung über Vernetzer-Polymere vorliegt, die aufgrund ihrer Polymerkettensequenz eine gerichtete Sekundärstruktur, evtl. Tertiärstruktur oder sogar Quartärstruktur ausbilden, sowie auf Polymerzusammensetzungen, die über solche Vernetzer vernetzt sind, auf einen Gegenstand, der ein solches vernetztes Polymersystem umfasst, sowie auf ein Verfahren zum Herstellen vernetzter Polymersysteme unter Verwendung solcher Vernetzer.

Um Polymersystemen eine gewünschte innere Struktur zu verleihen, werden die eingesetzten Polymere üblicherweise miteinander vernetzt. Durch die Art und den Grad der Vernetzung lassen sich gewünschte Eigenschaften in aus der Polymermischung hergestellten Gegenständen ausbilden.

Vernetzte Polymersysteme werden beispielsweise zur Herstellung elastischer, gleichzeitig belastbarer Materialien verwendet. Bekannte Polymersysteme hierfür sind Kautschuk(mischungen), die für die Herstellung verschiedenster elastischer Materialien verwendet werden. Nach DIN 53 501 bezeichnet man unvernetzte, aber vernetzbare Polymere mit gummielastischen Eigenschaften bei Raumtemperatur als Kautschuke. Kautschuk(mischungen) werden üblicherweise durch Vulkanisieren, also durch chemische Verknüpfung der Polymere, bevorzugt mit Hilfe von Schwefel, vernetzt. Die Vulkanisation mit Schwefel wird für Polymerketten angewendet, die Doppelbindungen enthalten. Für Kautschuke, die keine Doppelbindungen enthalten, werden z.B. Peroxide, die auch die Verknüpfung (Vulkanisation) von gesättigten Polymerketten ermöglichen, verwendet. Je nach gewünschter Anwendung der vulkanisierten Kautschukmischungen werden dem Kautschuk weitere Komponenten beigemischt, beispielsweise Füllstoffe, Weichmacher, Alterungsschutzmittel, andere Polymertypen, sowie Verarbeitungs- und Hilfsstoffe.

Es sind auch Kautschuksysteme bekannt, in denen neben den durch die Vulkanisation erwirkten festen Verbindungen der Polymerketten weitere vernetzende Komponenten enthalten sind, die der dreidimensionalen Ausrichtung der Polymerketten eine zusätzliche Struktur verleihen. So beschreiben beispielsweise Liu, J. et al in Macromolecules, herausgegeben von der American Chemical Society am 31.Oktober 2016, S.8593 -8604 die Einführung zusätzlicher flexibler Verlinkungen in einem vulkanisierten Kautschuksystem, wobei die zusätzlichen Verlinkungen über eingeführte Seitenketten erfolgt, die aufgrund nicht-kovalenter Bindungen flexible (lösbare und sich neu bildende) Vernetzungsstellen bereitstellen. Die nicht-kovalenten Bindungen lassen eine "Umorientierung" der dreidimensionalen Ausrichtung der Polymerstrukturen zu.

Ein sehr ähnliches System "selbstheilender Elastomere" wird von Wu, J. et al. In Advanced Material, 2017, 29 herausgegeben vom Wiley-Verlag unter Nr. 1702616 beschrieben. Hier werden Elastomere vorgestellt, die durch sowohl kovalente Verknüpfung, als auch über nicht-kovalente Bindungen miteinander vernetzt sind. Auch hier dienen die kovalenten Verknüpfungen der grundsätzlichen Verknüpfung der Polymere, während die nicht-kovalenten Verbindungsstellen die Struktur des Polymernetzwerks unterstützen, jedoch gleichzeitig flexibel halten.

Darüber hinaus wird in der US-Anmeldung US2016/0237261A1 der Einsatz von "supramolekularen Füllstoffen" in Kautschukzusammensetzungen beschrieben. Hierbei werden kurze Sequenzen aus Molekülen, die über nicht-kovalente Bindungen miteinander in Wechselwirkung treten können, in die Kautschukmischung eingebracht und gegebenenfalls mit den Kautschukpolymeren kovalent verbunden. Durch die nicht-kovalente Wechselwirkung dieser eingebrachten Molekülsequenzen untereinander bilden sich in der Kautschukmischung kristalline Bereiche, die als "integrierte Füllstoffe" zur Festigung des Kautschuks beitragen.

Auch Joseph J. Scavuzzo beschreibt in seiner Dissertationsarbeit der University of Akron aus Dezember 2014 auf Polyisobutylen basierende thermoplastische Polymersysteme, die durch kovalente Bindung von β-Alanin-Oligomeren interne kristalline Bereiche ausbilden, die als "Füllstoff" dienen.

Hans G. Börner stellt in einem Artikel in Progress in Polymer Science 34 (2009), (Elsevier) auf S. 811-851 verschiedene Strategien vor gewünschte Polymerketten durch endständige Verknüpfung mit weiteren Polymeren, die in der Lage sind eine dreidimensionale Struktur auszubilden, z.B. mit Proteinen oder Peptiden, in eine gerichtete Anordnung zu bringen. Hierbei wird die Wechselwirkung der endständig verknüpften, eine Struktur bildenden Polymere zur Ausrichtung und Anordnung der an diese gebundenen Polymerketten verwendet.

Der Einsatz von Proteinen in Kautschukmischungen ist zwar grundsätzlich bekannt, beispielsweise wird ein solcher Einsatz in EP 1 234 852 A1, DE 196 22 169 A1, US 5,587,41, US2017/0342252 A1, US 2008/0108733 A1, DE 40 05 493 A1, DE 10 2015 213 667 A1 und US 2016/0237261 A1 offenbart, jedoch wird dort entweder nicht beschrieben, dass die Proteine als Vernetzer dienen, oder es werden Proteine eingesetzt, die nicht dazu geeignet sind aufgrund der Ausbildung einer definierten Sekundärstruktur eine reversibel veränderbare Strukturänderung zu durchlaufen. Die EP 3 312 204 A1, die EP 2 098 564 A1 und die DE 10 2015 210 422 A1 beschreiben jeweils die Vernetzung von Kautschukpolymeren mit anderen Typen von Vernetzerpolymeren, die aber aufgrund ihrer Primärstruktur (Polymerkette) jeweils keine Sekundärstruktur ausbilden.

Die Aufgabe der vorliegenden Erfindung war es ein vernetztes Polymersystem bereitzustellen, das ein hohes Maß an Strukturintegrität auch nach Belastung besitzt, und dabei elastisch und belastbar ist. Ein solches Polymersystem sollte insbesondere für die Herstellung von Materialien und Gegenständen geeignet sein, die einer hohen Beanspruchung unterliegen, gleichzeitig aber elastisch und stabil sein müssen.

Diese Aufgabe wird gelöst durch ein vernetztes Polymersystem gemäß Anspruch 1. Bevorzugte Ausführungsformen und Details sind den Unteransprüchen zu entnehmen. Die Erfindung ist auch auf ein Verfahren zur Herstellung eines solchen Polymersystems, dessen Verwendung und auf Materialien, die ein solches Polymersystem enthalten oder aus diesem bestehen, gerichtet.

Die zu vernetzenden Polymere können alle Arten von Polymeren sein, die zur Herstellung elastischer Materialien üblicherweise verwendet werden. Dies sind insbesondere Kautschuk(mischungen), einschließlich Silikone (auch als Silikonkautschuk bekannt). Bevorzugt sind die zu vernetzenden Polymere Kautschuk(mischungen), wobei je nach gewünschtem Einsatzgebiet verschiedene Zusammensetzungen verwendet werden können.

Bei dem wenigstens einen Kautschuk kann es sich um einen oder mehrere Kautschuktypen handeln, beispielsweise und bevorzugt ausgewählt aus Naturkautschuk, also natürlichem Polyisopren, synthetischem Polyisopren, Polybutadien (Butadien-Kautschuk), einem nicht-funktionalisierten Styrol-Butadien-Copolymer (Styrol-Butadien-Kautschuk, der lösungspolymerisiert (SSBR-Kautschuk) oder emulsionspolymerisiert (ESBR-Kautschuk) sein kann), epoxidiertem Polyisopren und/oder Styrol-Isopren-Kautschuk, Isopren-Butadien-Copolymer, Butyl-Kautschuk, Halobutyl-Kautschuk, insbesondere Brombutyl- und/oder Chlorbutyl-Kautschuk, Polynorbornen-, Isopren-Isobutylen-Copolymer, Ethylen-Propylen-Dien-Kautschuk, Nitril-Kautschuk, Chloropren-Kautschuk, Acrylat-Kautschuk, Fluor-Kautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk, hydriertem Styrol-Butadien-Kautschuk, Butadien-Acrylnitril-Kautschuk, einem Terpolymer, das aus Ethylen-, Propylen- und/oder Ethylene-Propylen-Dien Monomeren (EPDM) gebildet ist, auf Isopren basierenden Block-Copolymeren, auf Butadien basierenden Block-Copolymeren, Styrol-Block-Copolymeren, Styrol-Butadien-Styrol-Block-Copolymeren (SBS), Styrol-Ethylen/Butadien-Styrol-Block-Copolymeren (SEBS), Styrol-[Ethylen-(Ethylen/Propylen)]-Styrol-Block-Copolymeren (SEEPS), Styrol-Isopren-Styrol-Block-Copolymeren (SIS), randomisierten Styrol-Copolymeren, hydrierten Styrol-Block-Copolymeren, Polyisobutylen, Ethylen-Vinylacetat (EVA)-Polymeren, Polyolefinen, amorphen Polyolefinen, semikristallinen Polyolefinen, alpha-Polyolefinen, "Reactor-ready" Polyolefinen, Acrylaten, Metallocen-katalysierten Polyolefin-Polymeren und -Elastomeren, im Reaktor hergestellten thermoplastischen Polyolefin-Elastomeren, Olefin-Block-Copolymeren, Co-Polyester-Block-Copolymeren, Polyurethan-Block-Copolymeren, Polyamid-Block-Copolymeren, thermoplastischen Vulkanisaten, Ethylen-Vinylacetat-Copolymeren, Ethylen-n-Butylacrylat-Copolymeren, Ethylen-Methylacrylat-Copolymeren, Neopren, Acrylsäuren, Urethan, Poly(acrylat), Ethylene-Acrylsäure-Copolymeren, Ethylen-Propylen-Polymeren, Propylen-Hexen-Polymeren, Ethylen-Buten-Polymeren, Ethylen-Okten-Polymeren, Propylen-Butene-Polymeren, Propylen-Okten-Polymeren, Metallocen-katalysierten Polypropylen-Polymeren, Metallocen-katalysierten Polyethylen-Polymeren, Ethylen-Propylen-Butylen-Terpolymeren, Copolymeren, die aus Propylen-, Ethylen-, C₄-C₁₀ alpha-Olefin-Monomeren gebildet sind, Polypropylen-Polymeren, Maleinsäure-modifizierten Polyolefinen, Polyester-Copolymeren, Copolyester-Polymeren, Ethylen-Acrylsäure-Copolymeren und/oder Polyvinylacetat, ohne auf die genannten beschränkt zu sein. Weitere möglicherweise einsetzbare Polymere können ausgewählt sein aus thermoplastischen Polyolefinen, Polyether-Ether-Keton, Polyamid, ataktischem Polypropylen, Polyethylen, einschließlich ataktischem Polypropylen.

Alle genannten Kautschuke oder genannten Polymere können auch funktionalisiert sein, also Gruppen enthalten, die den Polymeren gewünschte Eigenschaften verleihen. Beispiele für solche funktionalisierenden Gruppen sind Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan und/oder Sulfid und/oder Silan-Sulfid-Gruppen. Bestandteil solcher Funktionalisierungen können auch Metallatome sein.

Die Kautschukmischung kann beispielsweise und bevorzugt wenigstens einen im Stand der Technik bekannten, insbesondere oben aufgezählten, Dienkautschuk enthalten.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bevorzugt ist wenigstens eines der eingesetzten Polymere natürliches Polyisopren, synthetisches Polyisopren, Lösungsmittel-polymerisiertes Styrol-Butadien (SSBR), und/oder Butadien-Kautschuk (BR).

Bei dem natürlichen und/oder synthetischen Polyisopren sämtlicher Ausführungsformen kann es sich sowohl um cis-1,4-Polyisopren als auch um 3,4-Polyisopren handeln. Polyisopren kann durch stereospezifische Polymerisation in Lösung mit Ziegler-Natta-Katalysatoren oder unter Verwendung von fein verteilten Lithiumalkylen erhalten werden. Bevorzugt ist allerdings die Verwendung von cis-1,4-Polyisoprenen mit einem cis 1,4 Anteil > 90 Gew.-%. Bei Naturkautschuk (NR) handelt es sich um ein solches cis-1,4 Polyisopren, wobei der cis-1,4-Anteil im Naturkautschuk ist größer 99 Gew.- %. Ferner ist auch ein Gemisch eines oder mehrerer natürlicher Polyisoprene mit einem oder mehreren synthetischen Polyisopren(en) denkbar.

Falls in der erfindungsgemäßen Kautschukmischung Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.

Für den Fall, dass wenigstens ein Styrol-Butadien-Kautschuk (Styrol-Butadien-Copolymer) in der Kautschukmischung enthalten ist, kann es sich sowohl um einen lösungspolymerisierten Styrol-Butadien-Kautschuk (SSBR) als auch um einen emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet.

Für die Herstellung von Reifen enthält die Kautschukmischung bevorzugt wenigstens zwei Kautschuktypen, wobei diese bevorzugt ausgewählt sind aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk. Die genannten Kautschuke können gegebenenfalls auch durch geeignete Gruppen funktionalisiert sein, beispielsweise durch solche wie oben beschrieben. Eine derartige Kautschukmischung ist besonders für die Herstellung von umweltfreundlichen und rollwiderstandsarmen Fahrzeugluftreifen, insbesondere deren Laufstreifen, geeignet.

Bei der Herstellung von technischen Gummiartikeln, wie Bälgen, Förderbändern, Gurten, Riemen und Schläuchen, sowie bei Schuhsohlen kommen insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk zum Einsatz. Diese technischen Gummiartikel finden im täglichen Leben überall Verwendung, z.B. in Aufzügen, in der Automobilindustrie, in der Rohstoffindustrie, in der Lebensmittelindustrie und in der Medizintechnik.

Es ist bevorzugt, dass die Kautschukmischung natürliches und/oder synthetisches Polyisopren enthält und zwar in Mengen von 0 bis 50 phr, bevorzugt 0 bis 40 phr, besonders bevorzugt in Mengen von 0 bis 30 phr, falls vorhanden, bevorzugt wenigstens 0,1 phr, insbesondere 0,1 bis 30 phr, und/oder einen Butadien-Kautschuk und/oder Styrol-Butadien-Kautschuk, der ggf. hydriert sein kann. Der Butadien-Kautschuk wird vorzugsweise in Mengen von 2 bis 60 phr, bevorzugt in Mengen von 2 bis 50 phr, besonders bevorzugt in Mengen von 5 bis 50 phr, ganz besonders bevorzugt in Mengen von 10 bis 50 phr und wiederum besonders bevorzugt in Mengen von 10 bis 46 phr verwendet. Es ist auch möglich, dass der Kautschuk nur eine der genannten Kautschuksorten enthält, also aus dieser Sorte besteht (bis 100 phr)

Die hier verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Gemäß der vorliegenden Erfindung sind die beschriebenen Polymere in der Polymermischung, beispielsweise der Kautschukmischung, wenigstens teilweise über einen Vernetzer kovalent miteinander verbunden. Dies heißt, dass ein Vernetzer gemäß der Erfindung mit wenigstens zwei Polymersträngen der oben beschriebenen Polymere eine kovalente Bindung eingeht, so dass diese Polymerstränge über den Vernetzer miteinander kovalent verbunden sind.

Der Vernetzer gemäß der vorliegenden Erfindung ist selbst ein Polymer, wobei dieses Vernetzer-Polymer Monomere umfasst, oder aus diesen gebildet ist, die aufgrund ihrer Sequenz im Polymer (Primärstruktur) in der Lage sind eine gerichtete Anordnung des Polymers (Sekundärstruktur) zu bewirken. Dies soll heißen, dass das Vernetzer-Polymer selbst innerhalb der eigenen Polymerkette eine Sekundärstruktur ausbildet. Das Vernetzer-Polymer kann darüber hinaus auch eine geordnete Tertiärstruktur ausbilden, dies ist aber für die vorliegende Erfindung nicht zwingend notwendig. Auch die Ausbildung einer definierten Quartärstruktur durch Anordnung mehrerer Polymerketten ist gemäß der Erfindung möglich, nicht jedoch zwingend erforderlich.

Die Ausbildung einer aufgrund der Primärstruktur des Vernetzer-Polymers vorgegebenen Sekundärstruktur erlaubt ein reversibles "Ausstrecken" und gerichtetes "Wieder-Anordnen" des Vernetzer-Polymers, wobei das Vernetzer-Polymer sich aufgrund der Primärstruktur (aufgrund der vorgegebenen Sequenz der Monomere) im Wesentlichen wieder in seiner ursprünglichen Sekundärstruktur (und ggf. Tertiärstruktur) anordnet. Die aufgrund der Primärstruktur vorgegebene Sekundär- und ggf. Tertiärstruktur des Vernetzer-Polymers wird durch nicht-kovalente Bindungen wie beispielsweise Wasserstoffbrücken, ionische Wechselwirkungen, Dipol-Wechselwirkungen, elektrostatische Wechselwirkungen, van-der-Waals-Kräfte, hydrophile/hydrophobe Wechselwirkungen, Ligandierung, Komplexierung, π-Stacking (π- π Wechselwirkung) und ähnliche Kräfte bewirkt. Diese Kräfte wirken zwischen verschiedenen Monomeren derselben Polymerkette und bewirken dadurch eine gerichtete Anordnung des Polymers zur Ausbildung seiner Sekundärstruktur (und ggf. Tertiärstruktur).

Da die nicht-kovalenten Bindungen zwischen den einzelnen Monomeren relativ schwach sind, kann die gebildete Sekundär- und ggf. Tertiärstruktur durch Einwirkung von außen, beispielsweise durch Zufuhr von Energie aufgehoben werden, bildet sich aber bei Entfernung des äußeren Einflusses im Wesentlichen wieder zurück (falls die zugeführte Energie nicht die Struktur nachhaltig zerstört). Durch die Ausbildung der Sekundär- oder gar der Tertiärstruktur verkürzt sich der Abstand der Kettenenden des Vernetzer-Polymers im Vergleich zu seiner "ausgestreckten" Länge.

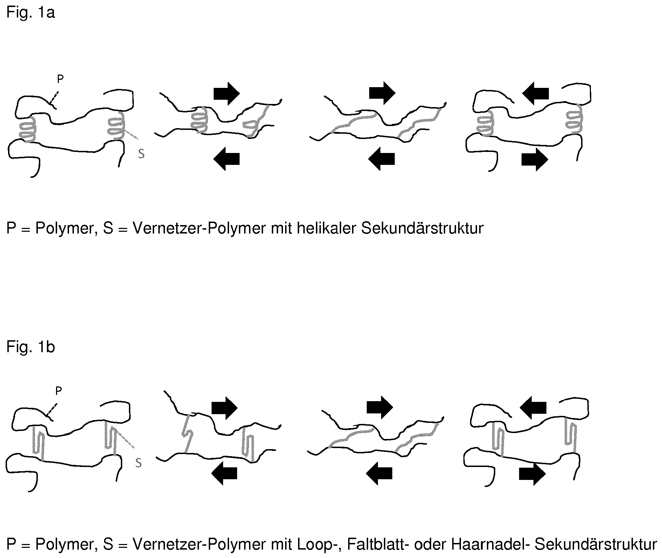

Aufgrund der Fähigkeit reversibel eine definierte geordnete Struktur anzunehmen, sind die Vernetzer-Polymere in der Lage auch die an das Vernetzer-Polymer kovalent gebundenen Polymere, beispielsweise die oben beschriebenen Kautschukpolymere, in der Mischung zu strukturieren, indem sie diese in einem dreidimensionalen Raum in einer bestimmten Position zueinander anordnen. Ein Beispiel für eine solche reversible Anordnung von mit Vernetzer-Polymeren vernetzten Polymeren ist in Figur 1a gezeigt. In diesem Beispiel dient als Vernetzer-Polymer eine Peptidkette, die aufgrund ihrer Primärstruktur eine Helixstruktur ausbildet. Auch die Ausbildung anderer Sekundärstrukturen im Vernetzer-Polymer ist möglich, wie beispielsweise eine Faltblattstruktur, eine Loop-Struktur oder eine Haarnadelstruktur (Figur 1b).

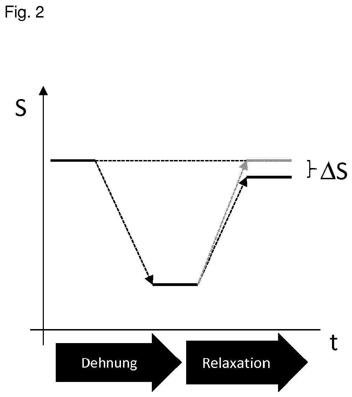

Durch diese gerichtete Anordnung aufgrund der "Rückkehr" der Vernetzer-Polymere in ihre Sekundärstruktur unterliegt das vernetzte Polymersystem gemäß der vorliegenden Erfindung einer deutlich geringeren Hysterese als vergleichbare Polymersysteme mit üblicher Vernetzung durch Schwefel-Vulkanisation (siehe Figur 2).

Als Vernetzer gemäß der vorliegenden Erfindung ist jedes Polymer geeignet, das aufgrund seiner Primärstruktur eine Sekundärstruktur innerhalb der eigenen Polymerkette ausbildet und außerdem an wenigstens zweien seiner Monomere, bevorzugt im endständigen Bereich, besonders bevorzugt an seinen jeweils endständigen Monomeren, chemisch reaktive Gruppen trägt, die mit einem Polymer der zu vernetzenden Polymermischung und/oder mit einem anderen Bestandteil der Zusammensetzung eine kovalente Bindung eingehen können. Solche reaktiven Gruppen zur Ausbildung einer kovalenten Bindung mit den Polymerketten der zu vernetzenden Polymere und/oder mit anderen Bestandteilen der Zusammensetzung sind dem Fachmann bekannt. Bevorzugt können diese ausgewählt sein aus -SH, R-Sx-R (worin R unabhängig voneinander für eine aliphatische Gruppe mit 1 bis 24 C-Atomen und/oder eine aromatische Gruppe mit 3 bis 24 C-Atomen und/oder einen Linker (eine C-Kette) mit mindestens einem Heteroatom, bevorzugt ausgewählt aus N,O und S, steht, und x eine ganze Zahl von 2 bis 8, bevorzugt von 2 bis 6, weiter bevorzugt von 2 bis 5, insbesondere 4, 3 oder 2 darstellt), Amin-, Amid-, Azid-, Cyanid-, Diazoalkan-, Alkoxy-, Nitriloxid-, Nitrilimin-, Nitron-, Aldehyd-, Keton-, Carboxy-, Imid-, Thioketon-, Alken-, Alkin-, Hydroxy-, Epoxy-, Thiotosylat-, Dithiocarbamat-, Silan-Sulfid-, Thioester- oder Silangruppen, ohne auf diese beschränkt zu sein.

Ein solches Vernetzer-Polymer lässt sich durch die Formel X-Z-X darstellen, worin X unabhängig voneinander eine der oben genannten reaktiven Gruppen darstellt und Z das Polymer, das zur Ausbildung einer Sekundär- oder Tertiärstruktur in der Lage ist. Die Polymerkette Z kann linear oder verzweigt sein, ist jedoch bevorzugt linear.

Polymere, die zur Ausbildung einer Sekundärstruktur oder gar zur Ausbildung einer Tertiärstruktur in der Lage sind, sind grundsätzlich bekannt. Beispiele für solche Polymere sind Oligopeptide, Polypeptide oder Proteine, die aufgrund ihrer Primärstruktur (Aminosäuresequenz) eine Helixstruktur (α-Helix oder π-Helix) oder eine β-Faltblattstruktur ausbilden können, wobei diese auch in einer Tertiärstruktur gerichtet zueinander angeordnet werden können, DNA- oder RNA-Einzel- oder Doppelstränge, beispielsweise loop-bildende Einzelstränge, Helix-bildende Doppelstränge oder "coiled-coil"-bildende Doppelstränge, natürliche und synthetische Block-Copolymere mit sich wiederholenden hydrophoben/hydrophilen Blöcken, sich wiederholenden "harten (kristallbildenden)" und "weichen" Blöcken oder sich wiederholenden Blöcken, von denen ein Teil zur Ausbildung nicht-kovalenter Bindungen in der Lage ist, der andere Teil nicht, ohne auf diese beschränkt zu sein.

Gemäß der vorliegenden Erfindung sind die eingesetzten Vernetzer-Polymere nicht auf einen bestimmten Polymertyp beschränkt, solange das /die Polymer(e) durch die Formel X-Z-X wie oben angegeben beschrieben werden können.

In einer bevorzugten Ausführungsform werden jedoch gemäß der vorliegenden Erfindung Oligopeptide, Polypeptide oder Proteine eingesetzt, die in ihrer Aminosäurekette wenigstens zwei reaktive funktionelle Gruppen gemäß der obigen Definition für X aufweisen. Es ist bevorzugt, dass wenigstens eine der funktionellen Gruppe in dem endständigen Bereich des Peptids oder Proteins vorkommt, wobei mit "endständigem Bereich" im Zusammenhang mit Polymeren der vorliegenden Erfindung die jeweils letzten 5, 4, 3, 2 oder das letzte Monomer gemeint ist. Es ist besonders bevorzugt, dass wenigstens eine der reaktiven funktionellen Gruppen an einer der beiden endständigen Aminosäuren vorkommt, besonders bevorzugt stellen die endständigen Aminosäuren der Polymerkette jeweils Aminosäuren mit einer der genannten reaktiven funktionellen Seitenketten dar. Ein Beispiel für eine Aminosäure mit einer entsprechenden reaktiven funktionellen Gruppe ist das Cystein, das eine freie SH-Gruppe aufweist.

Unter "Oligopeptid" versteht der Fachmann im Zusammenhang mit der vorliegenden Erfindung eine Aminosäurekette mit wenigstens 4 Aminosäuren und bis zu 20 Aminosäuren. Unter "Polypeptid" soll eine Aminosäurekette verstanden werden, die mehr als 20 Aminosäuren und bis zu 100 Aminosäuren umfasst. Der Begriff "Peptid" bezieht sich sowohl auf ein Oligo- als auch auf ein Polypeptid. Als "Protein" wird eine Aminosäuresequenz bezeichnet, die mehr als 100 Aminosäuren umfasst. Zur Ausbildung einer α-helikalen Struktur werden in einem Peptid / Protein wenigstens 4 Aminosäuren benötigt (eine "Umdrehung" greift über 3,6 Aminosäuren), zur Ausbildung einer β-Faltblattstruktur wenigstens 5 Aminosäuren. Die Ausbildung einer π-Helix gelingt ebenfalls erst bei mindestens 5 Aminosäuren. Gemäß der Erfindung können natürlich vorkommende Proteine oder Peptide eingesetzt werden, insbesondere solche, die eine ausgeprägte dreidimensionale Helix- oder Faltblatt-Strukturierung aufweisen, oder synthetische Peptide oder Proteine, die unter dem Aspekt der Ausbildung einer Sekundärstruktur hergestellt und/oder ausgewählt werden. Die in den Peptiden/Proteinen vorkommenden Aminosäuren können ausgewählt sein aus allen natürlich vorkommenden Aminosäuren, wie auch aus synthetisch modifizierten Aminosäuren. Synthetisch modifizierte Aminosäuren können entweder in der Seitengruppe oder im Peptidrückgrad (Bsp. Beta-Aminosäuren), oder sowohl in der Seitengruppe als auch im Peptidrückgrad modifiziert sein.

Beispiele für natürlich vorkommende Proteine mit ausgeprägter Helix-, Faltblatt-, Helix-Loop-Helix oder Helix-Turn-Helix-Struktur sind DNA-bindende Proteine, wie Transskriptionsfaktoren (Helix-Loop-Helix), Transskriptionsregulatoren (Helix-Turn-Helix), Seidenproteine (Faltblatt) oder das Myoglobin (8 Helices), wobei dies nur Beispiele aus einer unendlichen Zahl von Proteinen mit entsprechenden Strukturelementen sind.

Wird ein Oligopeptid als Vernetzer-Polymer eigesetzt, ist es bevorzugt, dass es wenigstens 4 Aminosäuren, besser aber wenigstens 13 Aminosäuren, weiter bevorzugt wenigstens 16, noch stärker bevorzugt mindestens 20 Aminosäuren umfasst. Wird ein Polypeptid oder ein Protein eingesetzt, werden Aminosäureketten mit wenigstens 30, wenigstens 40 oder wenigstens 50 Aminosäuren bevorzugt, so dass sich wenigstens eine ausgeprägte Sekundärstruktur (Helix oder Faltblatt) in dem Vernetzter-Polymer ausbilden kann. Wird ein Protein mit einer Aminosäurekette von mehr als 100 Aminosäuren verwendet, kann es neben der Ausbildung einer Sekundärstruktur auch zu der Ausbildung einer Tertiärstruktur kommen. Je ausgeprägter die Strukturbildung über nicht-kovalente Bindungskräfte in dem Vernetzer-Polymer ist, desto mehr Energie ist nötig, um das Vernetzer-Polymer in eine "gestreckte" oder "entfaltete" Konfiguration zu überführen. Dies bedeutet je ausgeprägter die Strukturbildung ist, desto unflexibler ist das vernetzte Polymersystem.

Es ist besonders bevorzugt, wenn bei einem Protein oder Peptid als eingesetztem Vernetzer-Polymer wenigstens eine Helix- oder Faltblattstruktur ausgebildet wird, besonders bevorzugt wenigstens eine Helix mit zumindest einem "Umlauf" (d.h. bei einer α-Helix eine Sequenz, die mindestens 4 Aminosäuren umfasst), besser mit wenigstens 3 "Umläufen" (d.h. bei einer α-Helix eine Sequenz, die mindestens 12 Aminosäuren umfasst), bevorzugt mit wenigstens 4 Umläufen, weiter bevorzugt wenigstens 5 Umläufen. Auch das Auftreten von mehr als einer Helix, bspw. von zwei, drei oder vier aufeinanderfolgenden Helixstrukturen in einer Proteinkette ist gemäß der Erfindung durchaus bevorzugt. Auch die Ausbildung von Faltblattstrukturen erfüllt die Anforderungen an die erfindungsgemäßen Vernetzer-Polymere, ebenso wie die Kombination von Helix- und Faltblattstrukturen innerhalb der Proteinkette. Es ist außerdem möglich, dass verschiedene Peptide und/oder Proteine in einer Kautschukzusammensetzung zur Vernetzung der zu vernetzenden Polymere eingesetzt werden, wobei sich diese eingesetzten unterschiedlichen Peptide / Proteine sowohl in ihrer Primär- wie auch in ihrer Sekundärstruktur voneinander unterscheiden können. Unterschiede können in der Kettenlänge, der Aminosäuresequenz und der Aminosäuremodifikation bestehen, so dass es hier zu einer unterschiedlichen Ausbildung verschiedener Sekundärstrukturen kommen kann, einerseits bezüglich der Ausprägung (beispielsweise der Anzahl der Umläufe einer Helixstruktur oder der Anzahl der "Faltblätter"), oder der Art (Helix-, Faltblatt-, oder Mischstrukturen) der Sekundärstruktur. Eine solche Varianz der eingesetzten Peptide / Proteine kann sich auch in einer unterschiedlichen Molekulargewichtsverteilung der eingesetzten Peptide / Proteine zeigen.

In einer besonders bevorzugten Ausführungsform eines Peptids oder Proteins als Vernetzungs-Polymer ist wenigstens eine endständige Aminosäure der Polymerkette ein Cystein, bevorzugt enthält das Vernetzer-Polymer wenigstens zwei Cysteine, besonders bevorzugt beide in endständiger Position. Cystein ist eine natürlich vorkommende Aminosäure mit einer freien SH-Gruppe.

Weitere mögliche und geeignete Vernetzer-Polymere sind Nukleinsäureketten. Hierzu zählen vor allem Desoxribonukleinsäureketten (DNA), aber auch Ribonukleinsäureketten (RNA) oder Peptid-Nukleinsäure-Konjugate. Die Nukleinsäureketten können einsträngig oder doppelsträngig vorliegen. In einer bevorzugten Ausführungsform liegen einsträngige Nukleinsäureketten vor, wobei diese eine Sequenz (Primärstruktur) aufweisen, die eine Basenpaarung der Nukleinsäurebasen zulässt. Hierbei soll es als gemäß der Erfindung verstanden werden, wenn eine Nukleinsäuresequenz eingesetzt wird, die einen Loop und zumindest eine Basenpaarung aufweist. Es ist allerdings bevorzugt, dass eine Basenpaarung über wenigstens 2, bevorzugt wenigstens 3, weiter bevorzugt wenigstens 4, noch weiter bevorzugt wenigstens 5, wenigstens 6, wenigstens 7 oder wenigstens 8 Basenpaare erfolgt (dies soll so verstanden werden, dass an einer Basenpaarung jeweils 2 komplementäre Nukleinsäurebasen beteiligt sind), wobei es besonders bevorzugt ist, dass die an der Basenpaarung beteiligten Nucleinsäuren in der Sequenz aufeinanderfolgen, (mit den "Loop"-Nukleinsäuren dazwischen). Somit umfassen die Nukleinsäureketten gemäß der Erfindung wenigstens 5 Nukleinsäuren, bevorzugt wenigstens 6, wenigstens 7, wenigstens 8, wenigstens 9, bzw. wenigstens 10 Nukleinsäuren. Es ist für die Stabilität der Loop-Struktur von Vorteil, wenn die Basenpaarung über wenigstens einen bestimmten Bereich, beispielsweise über wenigstens 4, wenigstens 6 oder wenigstens 8 aufeinanderfolgende Basen erfolgt. Dies bedeutet, dass die eingesetzten Nukleinsäureketten bevorzugt wenigstens 10, bevorzugt wenigstens 14, weiter bevorzugt wenigstens 18 Nukleinsäuren umfassen müssen, um eine solche Struktur ausbilden zu können (wenigstens zwei nicht komplementäre Basen bewirken den "loop", also die Umkehr der Nukleinsäurekette). Es ist durchaus bevorzugt, dass die eingesetzten Nukleinsäureketten mehr als 50, mehr als 70, mehr als 80 oder sogar mehr als 100 Nukleinsäuremonomere (Nukleotide) umfassen können, wobei sich in einer Nukleinsäurekette mehrere Sekundärstrukturen ausbilden können, die bspw. über nichtgepaarte Sequenzen verbunden sind. Ein Beispiel für solche Strukturen ist die sogenannte "Kleeblatt-Struktur", die natürlicherweise in tRNAs vorkommt. Je umfangreicher der Bereich der Basenpaarung insgesamt ist, desto stabiler ist die Sekundärstruktur der Nukleinsäurekette gegenüber zugeführter Energie. Auch hier kann eine Kombination von Molekülen mit unterschiedlicher Kettenlängen und -sequenzen erfolgen. Gemäß der Erfindung können die eingesetzten Vernetzer-Polymere natürlich vorkommende Nukleotide (Adenin, Guanin, Thymin, Cytosin, Uracil) umfassen und/oder auch synthetische oder synthetisch modifizierte Nukleotide, (Beispiel für eine synthetische Basenpaarung: dNaM-d5SICS und dNaM-dTPT3).

Es ist bekannt, dass die Basenpaarung zwischen Adenin und Thymin (oder Uracil) über zwei Wasserstoffbrücken erfolgt, während die Paarung von Guanin und Cytosin zur Ausbildung von drei Wasserstoffbrücken führt. Daher wird eine Sequenzfolge, in der eine G-C-Paarung innerhalb der Nukleinsäurekette erfolgt eine stabilere Struktur bewirken, als eine Sequenz, die zu einer A-T-Paarung führt. Die Sequenzen, die zu der Ausbildung einer innerhalb der einsträngigen Nukleinsäurekette entstehenden Basenpaarung führen, können beliebige Basen umfassen, sind jedoch zueinander "rückläufig komplementär", d.h. die Basenpaarung erfolgt nachdem sich die Nukleinsäurekette ab einer bestimmten Position "umdreht" und die Basen der folgenden Sequenz mit den Basen der zurückliegenden Sequenz Paarungen bilden. Eine solche Struktur wird in der Fachwelt als "Haarnadelstruktur" bezeichnet. Nukleinsäureketten mit Haarnadelstrukturen kommen natürlich vor, die bekanntesten Beispiele hierfür sind tRNA-Moleküle. Solche Haarnadelstrukturen lassen sich leicht in synthetische Nukleinsäuresequenzen einbauen, hierfür ist lediglich eine entsprechende Abfolge von Basen in der Sequenz zu beachten. Die Sequenzen der Nukleinsäureketten können auch so gewählt werden, dass sich innerhalb der Nukleinsäurekette mehrere Haarnadelstrukturen ausbilden, die in der Kette aufeinander folgen.

Auch im Falle der Verwendung von Nukleinsäureketten als Vernetzer-Polymere müssen sich im endständigen Bereich der Kette funktionelle reaktive Gruppen befinden, um eine kovalente Bindung mit den zu vernetzenden Polymerketten einzugehen. Hierfür können entweder die Nukleinsäuren im endständigen Bereich selbst modifiziert werden, oder es werden geeignete Moleküle an die Ketten ankonjugiert. Ein Beispiel hierfür ist wiederum der Einsatz geeigneter Aminosäuren, wie beispielsweise das Cystein.

In einer weiteren Ausführungsform können die Vernetzer-Polymere auch Peptid-Nukleinsäure-Konjugate oder Protein-Nukleinsäure-Konjugate sein, wobei hierin die Struktureigenschaften beider Molekülarten im Konjugat ergänzen können. Aber auch Konjugate, die einen langen Nukleinsäureanteil Z und daran ankonjugiert an beiden Enden der Kette eine einzelne oder mehrere Aminosäuren aufweisen, können die Anforderungen, die an die Vernetzer-Polymere der vorliegenden Erfindung gestellt werden, erfüllen.

Auch natürliche oder synthetisch hergestellte Block-Copolymere aus beliebigen Monomereinheiten können die Anforderungen an die Vernetzer-Polymere erfüllen, soweit sie Blöcke enthalten, die miteinander über eine der oben genannten Kräfte in Wechselwirkung treten können und dadurch dem Block-Copolymer eine definierte Sekundär- oder sogar Tertiärstruktur verleihen.

Selbstverständlich kann auch eine Mischung aus mehreren der oben genannten Vernetzer-Polymere für die Vernetzung der zu vernetzenden Polymere eingesetzt werden.

Die freien reaktiven Gruppen X des Vernetzer-Polymers, beispielsweise die SH-Gruppen eines Cysteins, aber auch alle anderen der oben genannten reaktiven funktionellen Gruppen, sind in der Lage in einer chemischen Reaktion mit den zu vernetzenden Polymeren eine kovalente Bindung auszubilden, so dass das Vernetzer-Polymer mit den Polymeren der bspw. Kautschukmischung kovalent verbunden wird.

Kautschuk wird üblicherweise durch Vulkanisation, d.h. durch eine chemische Reaktion vernetzt. Unter Vulkanisation versteht man die Verknüpfung der Polymerketten des Kautschuks, indem darin enthaltene reaktive Gruppen (beispielsweise Doppelbindungen in den Kautschuk-Polymerketten) zur Vernetzung verwendet werden. Der bekannteste Weg der Vulkanisation von Polymerketten, die Doppelbindungen enthalten, ist die Vernetzung mit Schwefel oder schwefelhaltigen Molekülen. Insbesondere, wenn die Polymerketten keine Doppelbindungen enthalten, ist auch eine Vulkanisation über Peroxide oder Harze bekannt (diese kann auch angewendet werden, wenn in den Polymeren Doppelbindungen vorliegen). Enthalten die zu vernetzenden Polymere reaktive Gruppen wie Halogene oder Carboxyfunktionen, kommen auch Metalloxid wie MgO oder ZnO zum Einsatz. Butadien-Styrol-, Butadien-Acrylonitril- und andere Kautschuke können auch rein thermisch vulkanisiert werden. Auch eine Mischung der genannten Vulkanisationsmethoden kann verwendet werden. Bei Silikonkautschuken kann auch die Essigsäure abspaltende Vernetzungsreaktion zum Einsatz kommen.

Gemäß der vorliegenden Erfindung ersetzen die Vernetzer-Polymere wenigstens einen Teil der zur Vernetzung verwendeten Verbindungen, beispielsweise der Schwefelmoleküle oder Schwefelgruppen in reaktiven Verbindungen, so dass neben den durch übliche Vulkanisation eingeführten Di- oder Oligosulfid-Bindungen zur Vernetzung der Kautschukpolymere auch Vernetzungen über die Vernetzer-Polymere vorliegen. In einer weiteren Ausführungsform kann die Vernetzung über die Vernetzer-Polymere gemäß der vorliegenden Erfindung auch die einzige Form der Vernetzung in der Polymermischung darstellen. Auf eine "übliche" Vulkanisation wird in diesem Fall verzichtet.

Es soll ausdrücklich festgehalten werden, dass die Vernetzer-Polymere je nach gewünschter Anwendung der vernetzten Polymermischung unterschiedliche Typen von Polymeren darstellen können, oder auch mehrere verschiedene Typen von Vernetzer-Polymeren nebeneinander eingesetzt werden können. Beispielsweise können als Vernetzer Oligopeptide, Polypeptide, Proteine, DNA, RNA, natürliche oder synthetische Block-Copolymere oder andere synthetische Polymere eingesetzt werden, oder Mischungen aus solchen Polymeren. Die Eignung und Bevorzugung einzelner dieser Polymere oder Mischungen davon hängt davon ab, unter welchen Bedingungen die Vernetzung erfolgt und für welche Anwendung die vernetzte Polymermischung gedacht ist.

Zur Vernetzung werden die Vernetzer-Polymere der Kautschukmischung in einer Menge von 0,1 bis 300, bevorzugt 0,1 bis 100 phr und besonders bevorzugt 0,1 bis 80 phr eingesetzt. Bevorzugt beträgt das Verhältnis der zu vernetzenden Polymere und der Vernetzer-Polymere in der Mischung vor der Vernetzung 1:50 bis 100:1, bezogen auf die Polymermoleküle, bevorzugt 1:10 bis 20:1, noch weiter bevorzugt 1:1 bis 3:2 (Anzahl der eingesetzten Polymerketten).

Wird zusätzlich eine übliche Vulkanisation durchgeführt, kann die Vulkanisation der erfindungsgemäß vernetzten Kautschukmischung in Anwesenheit von Schwefel und/oder Schwefelspendern mit Hilfe von Vulkanisationsbeschleunigern durchgeführt werden, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern und/oder Morpholinderivaten.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder N-tert-Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B. DipDis (Bis-(Diisopropyl)thiophosphoryldisulfid) und/oder Bis(O,O-2-ethylhexyl-thiophosphoryl)Polysulfid (z. B. Rhenocure SDT 50^{(R)}, Rheinchemie GmbH) und/oder Zinkdichloryldithiophosphat (z. B. Rhenocure ZDT/S^{(R)}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Weitere geeignete Vulkanisationsbeschleuniger sind beispielsweise Mercaptobenzothiazol, Tetramethylthiuramdisulfid, Benzothiazoldisulfid, Diphenylguanidin, Zinkdithiocarbamat, Alkylphenoldisulfid, Zinkbutylxanthat, N-Dicyclohexyl-2-benzothiazolsulfenamid, N-Cyclohexyl-2-benzothiazolsulfenamid, N-Oxydiethylen-benzothiazol-2-sulfenamid, N,N-Diphenyl-thioharnstoff, Dithiocarbamylsulfenamid, N,N-Diisopropylbenzothiozol-2-sulfenamid, Zink-2-mercaptotoluimidazol, Dithio-bis(N-methylpiperazin), Dithio-bis(N-beta-hydroxyethylpiperazin), Dithio-bis(dibenzylamin), und Kombinationen davon. Auch weitere netzwerkbildende Systeme, wie sie beispielsweise unter den Handelsnamen Vulkuren^{(R)}, Duralink^{(R)} oder Perkalink^{(R)} erhältlich sind, oder netzwerkbildende Systeme, wie sie in der WO 2010/049216 A2 beschrieben sind, können in der Kautschukmischung eingesetzt werden.

In einer Ausführungsform der Erfindung kann auf eine "übliche Vulkanisation" verzichtet werden und die Kautschukpolymere werden im Wesentlichen oder vollständig nur durch den Einsatz der hier beschriebenen Vernetzer-Polymere vernetzt. Bevorzugt findet eine Vernetzung über die hier beschriebenen Vernetzer-Polymere jedoch zusätzlich zu einer Vernetzung der Polymere über eine "übliche" Vulkanisation statt. Die Vernetzung über die Vernetzer-Polymere findet abhängig von der eingesetzten reaktiven funktionellen Gruppe an den Vernetzer-Polymeren unter geeigneten Reaktionsbedingungen statt. Im Fall der Verwendung von schwefelhaltigen Gruppen als reaktive funktionelle Gruppen findet die Vernetzung über eine der Vulkanisation entsprechende chemische Reaktion statt, bei der die Vernetzer-Polymere die sonst üblicherweise eingesetzten Schwefelspender wenigstens teilweise ersetzen.

Die erfindungsgemäße Kautschukmischung enthält ferner bevorzugt wenigstens einen Füllstoff wie Kieselsäure, Ruß sowie ggf. weitere bekannte polare und/oder unpolare Füllstoffe, wie Alumosilicate und andere Silicate, Kreide, Kaolin, Stärke, Magnesiumoxid, Zinkoxid, Tonminerale wie Bentonit, Titandioxid und/oder Kautschukgele, sowie Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) und/oder Graphit und/oder Graphene und/oder sogenannte "carbon-silica dual-phase filler".

Handelt es sich bei dem Füllstoff um wenigstens eine Kieselsäure, so enthält die Kautschukmischung bevorzugt 1 bis 300 phr, besonders bevorzugt 1 bis 200 phr, ganz besonders bevorzugt 1 bis 150 phr, wenigstens einer Kieselsäure.

Handelt es sich bei dem Füllstoff um wenigstens einen Ruß, so enthält die Kautschukmischung bevorzugt 1 bis 200 phr, besonders bevorzugt 1 bis 170 phr und ganz besonders bevorzugt 1 bis 100 phr wenigstens eines Rußes.

Bei den Kieselsäuren kann es sich um die dem Fachmann bekannten Kieselsäuren, die als Füllstoff für Reifenkautschukmischungen geeignet sind, handeln. Bevorzugt wird eine Fällungskieselsäure eingesetzt. Besonders bevorzugt ist es , wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 60 bis 260 m²/g, besonders bevorzugt von 120 bis 250 m²/g, und eine CTAB-Oberfläche (gemäß ASTM D 3765) von 30 bis 400 m²/g, bevorzugt von 60 bis 250 m²/g, besonders bevorzugt von 120 bis 250 m²/g, aufweist.

Enthält die Kautschukmischung Ruß, sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist.

Die erfindungsgemäße Kautschukmischung kann auch ein Gemisch zweier oder mehrerer der genannten Füllstoffe enthalten.

Die genannten Füllstoffe können auch mit Hilfe der Vernetzer-Polymere an die vernetzten Polymere, insbesondere die Kautschukpolymere gebunden sein. Hierfür werden Vernetzer-Polymere eingesetzt, die wenigstens eine mit den zu vernetzenden Polymeren reaktive Gruppe und eine mit den Füllstoffen reaktive Gruppe aufweisen. Durch Reaktion dieser Gruppen mit einerseits den Polymeren, andererseits den Füllstoffen, werden diese Füllstoffe kovalent an die vernetzen Polymere gebunden. Die Vernetzer-Polymere können somit wenigstens einen Teil der üblicherweise zu diesem Zweck eingesetzten Silane ersetzen. Die eingesetzten Füllstoffe können außerdem auch über die eingesetzten Vernetzer-Polymere untereinander verbunden sein.

Zinkoxid gehört im Rahmen der vorliegenden Erfindung nicht zu den Füllstoffen, ist aber bevorzugt in Kombination mit Stearinsäure in der erfindungsgemäßen Kautschukmischung enthalten.

Weiterhin enthält die Kautschukmischung bevorzugt noch weitere Zusatzstoffe.

Weitere Zusatzstoffe können im Wesentlichen - neben Zinkoxid (ZnO) und Stearinsäure - ggf. Silan-Kupplungsagenzien für die Anbindung von Kieselsäure an die Polymerketten der enthaltenen Kautschuke, Weichmacher, Vulkanisationsbeschleuniger, Ozonschutzmittel, Alterungsschutzmittel, Antioxidationsmittel, Klebharze, Mastikationshilfsmittel und weitere Aktivatoren bzw. Verarbeitungshilfsmittel wie z. B. Fettsäuren oder Fettsäurederivate wie Metallseifen (z. B. Zink- oder Calciumseifen) oder Fettsäureester oder -amide und/oder Metallkomplexe wie Zinkethylhexanoat oder Mischungen davon.

Der Mengenanteil der Gesamtmenge an weiteren Zusatzstoffen beträgt bevorzugt 3 bis 150 phr, bevorzugt 3 bis 100 phr und besonders bevorzugt 5 bis 100 phr.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubberto-Liquid-öle (RTL) oder Biomass-to-Liquid-öle (BTL) bevorzugt mit einem Gehalt an polyzyklischen Aromaten von weniger als 3 Gew.- percent gemäß Methode IP 346 oder pflanzliche Öle, beispielsweise Rapsöl oder Faktisse oder Weichmacherharze, die nicht zu den oben genannten Klebharzen zählen, synthetische Esterweichmacher oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese nicht als Kautschuk in die Berechnung der Zusammensetzung der Polymermatrix ein.

Ein weiterer Gegenstand der der vorliegenden Erfindung besteht in der Verwendung der beschriebenen vernetzen Kautschukmischung zur Herstellung eines elastischen Materials, beispielsweise zur Herstellung von Gummiartikeln, wie Bälgen, Förderbänder, Luftfedern, Gurten, Riemen, bspw. Keilriemen, Zahnriemen, Flachriemen, Keilrippenriemen, Schläuchen, Schuhsohlen, Profilen, Dichtungen, Membranen, Gummiringen, taktilen Sensoren für medizinische Anwendungen oder Roboteranwendungen, oder Fahrzeugreifen (auch Teilen davon). Damit ist ein weiterer Gegenstand der Erfindung auch ein elastisches Material, bei dessen Herstellung wenigstens eine erfindungsgemäße vernetzte Kautschukmischung verwendet wurde.

Unter Fahrzeugreifen werden Fahrzeugluftreifen und Vollgummireifen, inklusive Reifen für Industrie- und Baustellenfahrzeuge, LKW-, PKW- sowie Zweiradreifen verstanden. Die erfindungsgemäße Kautschukmischung kann auch für die Herstellung bestimmter Teile solcher Reifen eingesetzt werden, beispielsweise zur Herstellung des Laufstreifens oder einer Body-Mischung, einschließlich Seitenwand, Innenseele, Apex, Gürtel, Schulter, Squeegees, weitere Inserts (z.B. Runflat), Gürtelprofil, Karkasse, Wulstverstärker und/oder Bandage.

### Figuren

Figur 1 zeigt schematisch die Konformitätsveränderung der Polymere in dem vernetzten Polymersystem der vorliegenden Erfindung und die Rückkehr des Systems aufgrund der reversiblen Ausbildung der Sekundärstruktur der Vernetzer-Polymere. Fig. 1 zeigt hierbei eine Helixstruktur in dem Vernetzer-Polymer, Fig. 1b eine Faltblatt-, Loop- oder Haarnadel struktur.
Figur 2 zeigt einen Vergleich der Hysterese herkömmlich vernetzter Polymersysteme und des Systems der vorliegenden Erfindung; Schematische Darstellung der Entropieelastizität eines Elastomers ohne (schwarz) und mit (grau) sekundärstrukturbildendem Vernetzer-Polymer.

## Patentansprüche

1. Vernetztes Polymersystem, in dem Polymerketten einer Kautschukmischung über Vernetzer-Polymere kovalent verbunden sind, wobei die Vernetzer-Polymere vor der Vernetzung durch die Formel X-Z-X dargestellt werden können, wobei X jeweils eine reaktive funktionelle Gruppe darstellt, die unabhängig voneinander ausgewählt ist aus -SH, R-Sx-R, worin R unabhängig voneinander für eine aliphatische Gruppe mit 1 bis 24 C-Atomen und/oder eine aromatische Gruppe mit 3 bis 24 C-Atomen und/oder einen Linker mit mindestens einem Heteroatom, bevorzugt ausgewählt aus N,O und S, steht, und x eine ganze Zahl von 2 bis 8, bevorzugt von 2 bis 6, weiter bevorzugt von 2 bis 5, insbesondere 4, 3 oder 2 darstellt, Amin-, Amid-, Azid-, Cyanid-, Diazoalkan-, Alkoxy-, Nitriloxid-, Nitrilimin-, Nitron-, Aldehyd-, Keton-, Carboxy-, Imid-, Thioketon-, Alken-, Alkin-, Hydroxy-, Epoxy- Thiotosylat-, Dithiocarbamat-, Silan-Sulfid-, Thioester- oder Silangruppen, und Z eine Polymerkette darstellt, in der Z unabhängig voneinander dargestellt ist durch ein Peptid, ein Protein, eine Nukleinsäurekette, ein Peptid-Nukleinsäure-Konjugat, ein Protein-Nukleinsäure-Konjugat oder ein natürliches oder synthetisches Block-Copolymer, die aufgrund ihrer Primärstruktur dazu in der Lage ist durch nicht-kovalente Bindungen zwischen den Monomeren der Polymerkette eine Sekundärstruktur innerhalb der eigenen Polymerkette auszubilden.

2. Vernetztes Polymersystem gemäß Anspruch 1, wobei die Sekundärstruktur innerhalb der Polymerkette der Vernetzer-Polymere durch Wasserstoffbrückenbildung, ionische Wechselwirkungen, Dipol-Wechselwirkungen, elektrostatische Wechselwirkungen, van-der-Waals-Kräfte, hydrophile/hydrophobe Wechselwirkungen, Ligandierung, Komplexierung oder durch π-Stacking (π-π Wechselwirkung) oder eine Kombination dieser Kräfte bewirkt wird.

3. Vernetztes Polymersystem gemäß einem der Ansprüche 1 oder 2, wobei die zu vernetzenden Polymere in der Kautschukmischung ausgewählt sind aus Naturkautschuk, also natürlichem Polyisopren, synthetischem Polyisopren, Polybutadien (Butadien-Kautschuk), einem nicht-funktionalisierten Styrol-Butadien-Copolymer (Styrol-Butadien-Kautschuk, der lösungspolymerisiert (SSBR-Kautschuk) oder emulsionspolymerisiert (ESBR-Kautschuk) sein kann), epoxidiertem Polyisopren und/oder Styrol-Isopren-Kautschuk, Isopren-Butadien-Copolymer, Butyl-Kautschuk, Halobutyl-Kautschuk, insbesondere Brombutyl- und/oder Chlorbutyl-Kautschuk,, Polynorbornen-, Isopren-Isobutylen-Copolymer, Ethylen-Propylen-Dien-Kautschuk, Nitril-Kautschuk, Chloropren-Kautschuk, Acrylat-Kautschuk, Fluor-Kautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk, hydriertem Styrol-Butadien-Kautschuk, Butadien-Acrylnitril-Kautschuk, einem Terpolymer, das aus Ethylen-, Propylen- und/oder Ethylene-Propylen-Dien Monomeren (EPDM) gebildet ist, auf Isopren basierenden Block-Copolymeren, auf Butadien basierenden Block-Copolymeren, Styrol-Block-Copolymeren, Styrol-Butadien-Styrol-Block-Copolymeren (SBS), Styrol-Ethylen/Butylen-Styrol-Block-Copolymeren (SEBS), Styrol-[Ethylen-(Ethylen/Propylen)]-Styrol-Block-Copolymeren (SEEPS), Styrol-Isopren-Styrol-Block-Copolymeren (SIS), randomisierten Styrol-Copolymeren, hydrierten Styrol-Block-Copolymeren, Polyisobutylen, Ethylen-Vinylacetat (EVA)-Polymeren, Polyolefinen, amorphen Polyolefinen, semikristallinen Polyolefinen, alpha-Polyolefinen, "Reactor-ready" Polyolefinen, Acrylaten, Metallocen-katalysierten Polyolefin-Polymeren und -Elastomeren, im Reaktor hergestellten thermoplastischen Polyolefin-Elastomeren, Olefin-Block-Copolymeren, Co-Polyester-Block-Copolymeren, Polyurethan-Block-Copolymeren, Polyamid-Block-Copolymeren, thermoplastischen Polyolefinen, thermoplastischen Vulkanisaten, Ethylen-Vinylacetat-Copolymeren, Ethylen-n-Butylacrylat-Copolymeren, Ethylen-Methylacrylat-Copolymeren, Neopren, Acrylsäuren, Urethan, Poly(acrylat), Ethylen-Acrylsäure-Copolymeren, Polyether-Ether-Keton, Polyamid, ataktischem Polypropylen, Polyethylen, einschließlich ataktischem Polypropylen, Ethylen-Propylen-Polymeren, Propylen-Hexen-Polymeren, Ethylen-Buten-Polymeren, Ethylen-Okten-Polymeren, Propylen-Butene-Polymeren, Propylen-Okten-Polymeren, Metallocen-katalysierten Polypropylen-Polymeren, Metallocen-katalysierten Polyethylen-Polymeren, Ethylen-Propylen-Butylen-Terpolymeren, Copolymeren, die aus Propylen-, Ethylen-, C₄-C₁₀ alpha-Olefin-Monomeren gebildet sind, Polypropylen-Polymeren, Maleinsäure-modifizierten Polyolefinen, Polyester-Copolymeren, Copolyester-Polymeren, Ethylen-Acrylsäure-Copolymeren und/oder Polyvinylacetat.

4. Vernetztes Polymersystem gemäß einem der Ansprüche 1 bis 3, wobei das Peptid wenigstens 4 Aminosäuren, bevorzugt wenigstens 12, weiter bevorzugt wenigstens 16, noch weiter bevorzugt wenigstens 20 Aminosäuren umfasst, ein Protein wenigstens 100 Aminosäuren umfasst, eine Nukleinsäurekette wenigstens 5 Nukleotide, bevorzugt wenigstens 10, weiter bevorzugt wenigstens 14 oder wenigstens 18 Nukleotide umfasst, und ein Block-Copolymer wenigstens zwei Blöcke, die miteinander in Wechselwirkung treten können, umfasst.

5. Vernetztes Polymersystem gemäß einem der Ansprüche 1 bis 4, wobei das Polymersystem außerdem Füllstoffe enthält, bevorzugt ausgewählt aus Kieselsäure und Ruß.

6. Vernetztes Polymersystem gemäß Anspruch 5, wobei die Füllstoffe wenigstens zum Teil über Vernetzer-Polymere an die Kautschukpolymere und/oder untereinander kovalent gebunden sind.

7. Vernetztes Polymersystem gemäß einem der Ansprüche 1 bis 6, wobei die Kautschukpolymere nur über die Vernetzer-Polymere miteinander verbunden sind und keine weiteren kovalenten Bindungen untereinander aufweisen oder die Kautschukpolymere zusätzlich über weitere kovalente Bindungen miteinander vernetzt sind, wobei die weiteren Bindungen bevorzugt Di- oder Oligosulfidbindungen darstellen.

8. Vernetztes Polymersystem gemäß einem der Ansprüche 1 bis 7, außerdem enthaltend weitere Zusatzstoffe, ausgewählt aus Zinkoxid, Stearinsäure, Silan-Kupplungsagenzien für die Anbindung der Füllstoffe an die Polymerketten der enthaltenen Kautschuke, Weichmacher, Vulkanisationsbeschleuniger, Ozonschutzmittel, Alterungsschutzmittel, Antioxidantien, Klebharze, Mastikationshilfsmittel, weitere Aktivatoren und Verarbeitungshilfsmittel.

9. Verfahren zur Herstellung eines vernetzten Polymersystems gemäß einem der Ansprüche 1 bis 8, wobei einer Kautschukmischung Vernetzer-Polymere in einer Menge von 0,1 bis 300, bevorzugt 0,1 bis 100 phr und besonders bevorzugt 0,1 bis 80 phr zugegeben werden und diese durch eine chemische Reaktion miteinander kovalent verbunden werden.

10. Verfahren gemäß Anspruch 9, wobei die reaktiven funktionellen Gruppen schwefelhaltige Gruppen sind und die chemische Reaktion einer Vulkanisation entspricht.

11. Verwendung eines vernetzten Polymersystems gemäß einem der Ansprüche 1 bis 8 zur Herstellung eines Gummiartikels, insbesondere eines Reifen oder Reifenteils, bevorzugt eines luftgefüllten Reifens oder Teilen davon, eines Vollgummireifens oder Teilen davon, einer Luftfeder, eines Balgs, Förderbands, Gurtes, Riemens, Schlauchs, Gummibands, Profils, einer Dichtung, einer Membran, taktilen Sensoren für medizinische Anwendungen oder Roboteranwendungen, oder einer Schuhsohle oder Teilen davon.

12. Verfahren zur Herstellung eines Gummiartikels, bei dem eine Kautschukmischung wie in Anspruch 3 definiert mit einem Vernetzer-Polymer wie in Anspruch 1 definiert vermengt wird, wenigstens ein weiterer Zusatzstoff, ausgewählt aus Füllstoffen, Zinkoxid, Stearinsäure, Silan-Kupplungsagenzien für die Anbindung der Füllstoffe an die Polymerketten der enthaltenen Kautschuke, Weichmachern, Vulkanisationsbeschleunigern, Ozonschutzmitteln, Alterungsschutzmitteln, Antioxidationsmitteln, Klebharzen, Mastikationshilfsmitteln, weiteren Aktivatoren und Verarbeitungshilfsmitteln, zugesetzt wird und die so hergestellte Mischung einer Vernetzungsreaktion unterworfen wird, bei der
(i) die Kautschukpolymere untereinander, und/oder
(ii) die Kautschukpolymere mit den Füllstoffen, und/oder
(iii) die Füllstoffe untereinander
über die Vernetzer-Polymere kovalent vernetzt werden.

13. Elastisches Material, das aus einem vernetzten Polymersystem gemäß einem der Ansprüche 1 bis 8 hergestellt wurde, insbesondere nach einem Verfahren gemäß einem der Ansprüche 9, 10 oder 12.

14. Gegenstand, umfassend oder hergestellt aus einem Material gemäß Anspruch 13.

## Claims

1. Crosslinked polymer system in which polymer chains of a rubber mixture are covalently bonded via crosslinker polymers, wherein prior to crosslinking the crosslinker polymers may be represented by the formula X-Z-X, wherein X in each case represents a reactive functional group which is independently at each occurrence selected from -SH, R-Sx-R, wherein R independently at each occurrence represents an aliphatic group having 1 to 24 carbon atoms and/or an aromatic group having 3 to 24 carbon atoms and/or a linker having at least one heteroatom, preferably selected from N, O and S, and x represents an integer from 2 to 8, preferably from 2 to 6, more preferably from 2 to 5, in particular 4, 3 or 2, amine, amide, azide, cyanide, diazoalkane, alkoxy, nitrile oxide, nitrile imine, nitrone, aldehyde, ketone, carboxyl, imide, thioketone, alkene, alkyne, hydroxyl, epoxy, thiotosylate, dithiocarbamate, silane sulfide, thioester or silane groups, and Z represents a polymer chain in which Z is independently at each occurrence represented by a peptide, a protein, a nucleic acid chain, a peptide-nucleic acid conjugate, a protein-nucleic acid conjugate or a natural or synthetic block copolymer which is on account of its primary structure capable of forming a secondary structure within its own polymer chain through noncovalent bonds between the monomers of the polymer chain.

2. Crosslinked polymer system according to Claim 1, wherein the secondary structure within the polymer chain of the crosslinker polymers is brought about by hydrogen bond formation, ionic interactions, dipole interactions, electrostatic interactions, van der Waals forces, hydrophilic/hydrophobic interactions, ligandization, complexation or by n-stacking (n-n interaction) or a combination of these forces.

3. Crosslinked polymer system according to either of Claims 1 or 2, wherein the polymers to be crosslinked in the rubber mixture are selected from natural rubber, i.e. natural polyisoprene, synthetic polyisoprene, polybutadiene (butadiene rubber), a non-functionalized styrene-butadiene copolymer (styrene-butadiene rubber, which may be solution polymerized (SSBR rubber) or emulsion polymerized (ESBR rubber)), epoxidized polyisoprene and/or styrene-isoprene rubber, isoprene-butadiene copolymer, butyl rubber, halobutyl rubber, in particular bromobutyl and/or chlorobutyl rubber, polynorbornene, isoprene-isobutylene copolymer, ethylene-propylene-diene rubber, nitrile rubber, chloroprene rubber, acrylate rubber, fluororubber, silicone rubber, polysulfide rubber, epichlorohydrin rubber, styrene-isoprene-butadiene terpolymer, hydrogenated acrylonitrile butadiene rubber, hydrogenated styrene-butadiene rubber, butadiene-acrylonitrile rubber, a terpolymer formed from ethylene, propylene and/or ethylene-propylene-diene monomers (EPDM), isoprene-based block copolymers, butadiene-based block copolymers, styrene block copolymers, styrene-butadiene-styrene block copolymers (SBS), styrene-ethylene/butylene-styrene block copolymers (SEBS), styrene-[ethylene-(ethylene/propylene)]-styrene block copolymers (SEEPS), styrene-isoprene-styrene block copolymers (SIS), randomized styrene copolymers, hydrogenated styrene block copolymers, polyisobutylene, ethylene-vinyl acetate (EVA) polymers, polyolefins, amorphous polyolefins, semicrystalline polyolefins, alpha-polyolefins, "reactor-ready" polyolefins, acrylates, metallocene-catalysed polyolefin polymers and elastomers, reactor-produced thermoplastic polyolefin elastomers, olefin block copolymers, copolyester block copolymers, polyurethane block copolymers, polyamide block copolymers, thermoplastic polyolefins, thermoplastic vulcanizates, ethylene-vinyl acetate copolymers, ethylene-n-butyl acrylate copolymers, ethylene-methyl acrylate copolymers, neoprene, acrylic acids, urethane, poly(acrylate), ethylene-acrylic acid copolymers, polyether ether ketone, polyamide, atactic polypropylene, polyethylene, including atactic polypropylene, ethylene-propylene polymers, propylene-hexene polymers, ethylene-butene polymers, ethylene-octene polymers, propylene-butene polymers, propylene-octene polymers, metallocene-catalysed polypropylene polymers, metallocene-catalysed polyethylene polymers, ethylene-propylene-butylene terpolymers, copolymers formed from propylene, ethylene, C₄-C₁₀-alpha-olefin monomers, polypropylene polymers, maleic acid-modified polyolefins, polyester copolymers, copolyester polymers, ethylene-acrylic acid copolymers and/or polyvinyl acetate.

4. Crosslinked polymer system according to any of Claims 1 to 3, wherein the peptide comprises at least 4 amino acids, preferably at least 12, more preferably at least 16, yet more preferably at least 20 amino acids, a protein comprises at least 100 amino acids, a nucleic acid chain comprises at least 5 nucleotides, preferably at least 10, more preferably at least 14 or at least 18 nucleotides, and a block copolymer comprises at least two blocks which may interact with one another.

5. Crosslinked polymer system according to any of Claims 1 to 4, wherein the polymer system also contains fillers, preferably selected from silicic acid and carbon black.

6. Crosslinked polymer system according to Claim 5, wherein the fillers are at least partially covalently bonded to the rubber polymers and/or to one another via crosslinker polymers.

7. Crosslinked polymer system according to any of Claims 1 to 6, wherein the rubber polymers are bonded to one another only via the crosslinker polymers and exhibit no further covalent bonds with one another or the rubber polymers are additionally crosslinked with one another via further covalent bonds, wherein the further bonds are preferably di- or oligosulfide bonds.

8. Crosslinked polymer system according to any of Claims 1 to 7, additionally containing further additives selected from zinc oxide, stearic acid, silane coupling agents for bonding the fillers to the polymer chains of the rubbers present, plasticizers, vulcanization accelerators, antiozonants, aging protectants, antioxidants, tackifier resins, mastication aids, further activators and processing aids.

9. Process for producing a crosslinked polymer system according to any of Claims 1 to 8, wherein a rubber mixture is admixed with crosslinker polymers in an amount of 0.1 to 300, preferably 0.1 to 100, phr and particularly preferably 0.1 to 80 phr and these are covalently bonded to one another via a chemical reaction.

10. Process according to Claim 9, wherein the reactive functional groups are sulfur-containing groups and the chemical reaction is a vulcanization.

11. Use of a crosslinked polymer system according to any of Claims 1 to 8 for producing a rubber article, in particular a tyre or a tyre component, preferably a pneumatic tyre or parts thereof, a solid rubber tyre or parts thereof, an air spring, a bellows, conveyor belt, strap, force transfer belt, hose, rubber band, profile, a seal, a membrane, tactile sensors for medical applications or robot applications or a shoe sole or parts thereof.

12. Process for producing a rubber article, wherein a rubber mixture as defined in Claim 3 is blended with a crosslinker polymer as defined in Claim 1, at least one further additive selected from fillers, zinc oxide, stearic acid, silane coupling agents for bonding the fillers to the polymer chains of the rubbers present, plasticizers, vulcanization accelerators, antiozonants, aging protectants, antioxidants, tackifier resins, mastication aids, further activators and processing aids is added and the thus produced mixture is subjected to a crosslinking reaction, wherein
(i) the rubber polymers are covalently crosslinked with one another via the crosslinker polymers, and/or
(ii) the rubber polymers are covalently crosslinked with the fillers via the crosslinker polymers, and/or
(iii) the fillers are covalently crosslinked with one another via the crosslinker polymers.

13. Elastic material produced from a crosslinked polymer system according to any of Claims 1 to 8, in particular by a process according to any of Claims 9, 10 or 12.

14. Article comprising or produced from a material according to Claim 13.

## Revendications

1. Système polymère réticulé, dans lequel des chaînes polymères d'un mélange de caoutchouc sont reliées par liaison covalente par des polymères réticulants, les polymères réticulants pouvant, avant la réticulation, être représentés par la formule X-Z-X, dans laquelle chaque X représente un groupe fonctionnel réactif, qui indépendamment des autres est choisi parmi -SH, R-Sx-R, R représentant, indépendamment les uns des autres, un groupe aliphatique ayant 1 à 24 atomes de carbone et/ou un groupe aromatique ayant 3 à 24 atomes de carbone et/ou un groupe de liaison ayant au moins un hétéroatome, de préférence choisi parmi N, O et S, et x représente un nombre entier de 2 à 8, de préférence de 2 à 6, plus préférentiellement de 2 à 5, en particulier de 4, 3 ou 2, représente un groupe amine, amide, azide, cyanure, diazoalcane, alcoxy, nitrile-oxyde, nitrile-imine, nitrone, aldéhyde, cétone, carboxy, imide, thiocétone, alcène, alcyne, hydroxy, époxy, thiotosylate, dithiocarbamate, silane-sulfure, thioester ou silane, et Z représente une chaîne polymère dans laquelle Z, indépendamment les uns des autres, est représenté par un peptide, une protéine, une chaîne d'acide nucléique, un conjugué peptide-acide nucléique, un conjugué protéine-acide nucléique ou un copolymère à blocs naturel ou synthétique, qui, du fait de leur structure primaire, sont à même, par des liaisons non covalentes entre les monomères de la chaîne polymère, de former une structure secondaire à l'intérieur de la chaîne polymère proprement dite.

2. Système polymère réticulé selon la revendication 1, dans lequel la structure secondaire à l'intérieur de la chaîne polymère des polymères réticulants est réalisée par formation de ponts hydrogène, interactions ioniques, interactions dipolaires, interactions électrostatiques, forces de van-der-Waals, interactions hydrophiles/hydrophobes, coordination, complexation ou par des empilements π (interaction π-π) ou une combinaison de ces forces.

3. Système polymère réticulé selon l'une des revendications 1 ou 2, dans lequel les polymères à réticuler dans le mélange de caoutchouc sont choisis parmi le caoutchouc naturel, c'est-à-dire le polyisoprène naturel, le polyisoprène synthétique, le polybutadiène (caoutchouc butadiène), un copolymère styrène-butadiène non fonctionnalisé (caoutchouc styrène-butadiène, qui peut être polymérisé en solution (caoutchouc SSBR) ou polymérisé en émulsion (caoutchouc ESBR)), le polyisoprène époxydé et/ou le caoutchouc styrène-isoprène, le copolymère isoprène-butadiène, le caoutchouc butyle, un caoutchouc halogénobutyle, en particulier le caoutchouc bromobutyle et/ou chlorobutyle, le polynorbornène, le copolymère isoprène-isobutylène, le caoutchouc éthylène-propylène-diène, le caoutchouc nitrile, le caoutchouc chloroprène, le caoutchouc acrylate, le caoutchouc fluoré, le caoutchouc silicone, le caoutchouc polysulfure, le caoutchouc épichlorhydrine, le terpolymère styrène-isoprène-butadiène, le caoutchouc acrylonitrilebutadiène hydrogéné, le caoutchouc styrène-butadiène hydrogéné, le caoutchouc butadiène-acrylonitrile, un terpolymère formé de monomères éthylène, propylène et/ou éthylène-propylène-diène (EPDM), les copolymères à blocs à base d'isoprène, les copolymères à blocs à base de butadiène, les copolymères à blocs styrène, les copolymères à blocs styrène-butadiène-styrène (SBS), les copolymères à blocs styrène-éthylène/butylène-styrène (SEBS), les copolymères à blocs styrène-[éthylène-(éthylène/propylène)]-styrène (SEEPS), les copolymères à blocs styrène-isoprène-styrène (SIS), les copolymères du styrène statistiques, les copolymères à blocs styrène hydrogéné, le polyisobutylène, les polymères éthylène-acétate de vinyle (EVA), les polyoléfines, les polyoléfines amorphes, les polyoléfines semi-cristallines, les alpha-polyoléfines, les polyoléfines « Reactor-ready », les acrylates, les polymères et élastomères de polyoléfines catalysées par un métallocène, les élastomères de polyoléfines thermoplastiques fabriqués dans un réacteur, les copolymères à blocs d'oléfines, les copolymères à blocs de copolyesters, les copolymères à blocs de polyuréthane, les copolymères à blocs de polyamide, les polyoléfines thermoplastiques, les vulcanisats thermoplastiques, les copolymères éthylène-acétate de vinyle, les copolymères éthylène-acrylate de n-butyle, les copolymères d'éthylène-acrylate de méthyle, le néoprène, les acides acryliques, l'uréthane, le poly(acrylate), les copolymères éthylène-acide acrylique, la polyéther-éther-cétone, le polyamide, le polypropylène atactique, le polyéthylène, y compris le polypropylène atactique, les polymères éthylène-propylène, les polymères propylène-hexène, les polymères éthylène-butène, les polymères éthylène-octène, les polymères propylène-butène, les polymères propylène-octène, les polymères de polypropylène catalysés par un métallocène, les polymères de polyéthylène catalysés par un métallocène, les terpolymères éthylène-propylène-butylène, les copolymères formés de monomères propylène, éthylène, alpha-oléfine en C₄-C₁₀, les polymères de polypropylène, les polyoléfines modifiées par l'acide maléique, les copolymères de polyesters, les polymères de copolyesters, les copolymères éthylène-acide acrylique et/ou le poly(acétate de vinyle).

4. Système polymère réticulé selon l'une des revendications 1 à 3, dans lequel le peptide comprend au moins 4 acides aminés, de préférence au moins 12, plus préférentiellement au moins 16, d'une manière encore plus préférée au moins 20 acides aminés, une protéine comprend au moins 100 acides aminés, une chaîne d'acide nucléique comprend au moins 5 nucléotides, de préférence au moins 10, plus préférentiellement au moins 14 ou au moins 18 nucléotides, et un copolymère à blocs comprend au moins deux blocs, qui peuvent entrer en interaction l'un avec l'autre.

5. Système polymère selon l'une des revendications 1 à 4, le système polymère contenant par ailleurs des charges, de préférence choisies parmi la silice et le noir de carbone.

6. Système polymère selon la revendication 5, dans lequel les charges sont au moins partiellement liées par l'intermédiaire de polymères réticulants aux polymères de caoutchouc et/ou d'une manière covalente les unes aux autres.

7. Système polymère réticulé selon l'une des revendications 1 à 6, dans lequel les polymères de caoutchouc ne sont reliés les uns aux autres que par l'intermédiaire des polymères réticulants et ne présentent aucune liaison covalente supplémentaire, ou les polymères de caoutchouc sont en outre réticulés les uns aux autres par des liaisons covalentes supplémentaires, les liaisons supplémentaires représentant des liaisons di- ou oligosulfure.

8. Système polymère réticulé selon l'une des revendications 1 à 7, contenant en outre des additifs supplémentaires choisis parmi l'oxyde de zinc, l'acide stéarique, les agents de couplage de type silane pour la liaison des charges aux chaînes polymères des caoutchoucs obtenus, des plastifiants, des accélérateurs de vulcanisation, des agents de protection contre l'ozone, des agents de protection contre le vieillissement, des antioxydants, des résines adhésives, des auxiliaires de mastication, des activateurs et auxiliaires de mise en œuvre supplémentaires.

9. Procédé de fabrication d'un système polymère réticulé selon l'une des revendications 1 à 8, dans lequel un mélange de caoutchouc est additionné de polymères réticulants en une quantité de 0,1 à 300, de préférence de 0,1 à 100 phr et d'une manière particulièrement préférée de 0,1 à 80 phr, ces derniers étant reliés par liaison covalente les unes aux autres par une réaction chimique.

10. Procédé selon la revendication 9, dans lequel les groupes fonctionnels réactifs sont des groupes sulfurés et la réaction chimique correspond à une vulcanisation.

11. Utilisation d'un système polymère réticulé selon l'une des revendications 1 à 8 pour fabriquer un article en caoutchouc, en particulier un pneu ou une partie de pneu, de préférence un pneu à air ou des parties de celui-ci, un pneu en caoutchouc plein ou des parties de celui-ci, un ressort pneumatique, un soufflet, une bande transporteuse, une courroie, une sangle, un tuyau souple, une bande de caoutchouc, un profilé, une étanchéité, une membrane, des capteurs tactiles pour applications médicales ou applications robotisées, ou une semelle de chaussure ou des parties de celle-ci.

12. Procédé de fabrication d'un article en caoutchouc, dans lequel un mélange de caoutchouc tel que défini dans la revendication 3 est mélangé à un polymère réticulant tel que défini dans la revendication 1, on ajoute au moins un additif supplémentaire choisi parmi les charges, l'oxyde de zinc, l'acide stéarique, les agents de couplage de type silane pour la liaison des charges aux chaînes polymères des caoutchoucs contenus, les plastifiants, les accélérateurs de vulcanisation, les agents de protection contre l'ozone, les agents de protection contre le vieillissement, les antioxydants, les résines adhésives, les auxiliaires de mastication, des activateurs et agents de mise en œuvre supplémentaires, et le mélange ainsi fabriqué est soumis à une réaction de réticulation, dans laquelle on réticule par liaison covalente par l'intermédiaire des polymères réticulants
(i) les polymères de caoutchouc les uns avec les autres, et/ou
(ii) les polymères de caoutchouc avec les charges, et/ou
(iii) les charges les unes avec les autres.

13. Matériau élastique qui a été fabriqué à partir d'un système polymère réticulé selon l'une des revendications 1 à 8, en particulier par le procédé selon l'une des revendications 9, 10 ou 12.

14. Objet comprenant un matériau selon la revendication 13 ou fabriqué à partir de celui-ci.
